(19) Europäisches Patentamt
European Patent Office
Office européen des brevets

(11) **EP 4 546 881 A1**

(12) **EUROPEAN PATENT APPLICATION**
published in accordance with Art. 153(4) EPC

(43) Date of publication:
**30.04.2025 Bulletin 2025/18**

(21) Application number: **23826879.1**

(22) Date of filing: **24.05.2023**

(51) International Patent Classification (IPC):
***H04W 52/02*** (2009.01)      ***H04W 8/24*** (2009.01)

(52) Cooperative Patent Classification (CPC):
**H04W 8/24; H04W 52/02**

(86) International application number:
**PCT/JP2023/019254**

(87) International publication number:
**WO 2023/248691 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.06.2022 JP 2022099925**

(71) Applicant: **DENSO CORPORATION**
**Kariya-city, Aichi 448-8661 (JP)**

(72) Inventors:
• **NAGANO, Tatsuki**
**Kariya-city, Aichi 4488661 (JP)**
• **TAKAHASHI, Hideaki**
**Kariya-city, Aichi 4488661 (JP)**

(74) Representative: **TBK**
**Bavariaring 4-6**
**80336 München (DE)**

(54) **TERMINAL DEVICE, BASE STATION DEVICE, AND METHOD**

(57)     A terminal apparatus (10) includes a controller, and a communicator configured to be controlled by the controller to perform radio communication. For one or more discontinuous reception configurations out of a plurality of discontinuous reception configurations that are configurable by a base station apparatus (20), the controller of the terminal apparatus (10) is configured to transmit preference information indicating whether or not the terminal apparatus is to use the one or more discontinuous reception configurations, to the base station apparatus via the communicator.

Fig. 12

## Description

## Cross-Reference To Related Application

The present application is based on and claims the benefit of priority to Japanese Patent Application No. 2022-099925 filed on June 21, 2022, the contents of which are incorporated herein by reference in its entirety.

## Technical Field

The present disclosure relates to a terminal apparatus, a base station apparatus, and a method that support a plurality of discontinuous reception configurations.

## Background

In recent years, a technology of extended reality (XR) has been developed. XR is a concept including multi-media integration technologies, such as virtual reality (VR), augmented reality (AR), mixed reality (MR), and substitutional reality (SR). In XR, three-dimensional time series image data in a real space and/or a virtual space, audio data of a plurality of channels (stereo, 5.1ch or the like), other data presented to a user, control data, and the like are transmitted and received in parallel. XR requires low latency and high reliability in order to maintain and enhance quality of experience of users.

In NPL 1, implementation of XR in Fifth Generation New Radio (5G NR) being radio specifications defined by the Third Generation Partnership Project (3GPP (trademark)) is studied.

## Citation List

## Non Patent Literature

[NPL 1] 3GPP TR 38.838 V17.0.0 (2021-12)
[NPL 2] 3GPP TS 38.331 V17.0.0 (2022-03)

## SUMMARY

In the studies on XR implementation described above, power consumption in a terminal apparatus is presented as an item to be studied. In XR, it is assumed that a plurality of data streams having different periods are transmitted to the terminal apparatus.

As a technology for reducing power consumption, discontinuous reception (DRX) is used, in which a physical downlink control channel (PDCCH) indicating information such as scheduling is discontinuously received. NPL 2 describes transmission and reception of various parameters and control information related to discontinuous reception.

As a result of detailed studies carried out by the inventors, the following problem is found. Specifically, in the discontinuous reception technology described in NPL 2, assumption on a plurality of data streams having different characteristics, such as XR, is not sufficient. Thus, in a case where the discontinuous reception technology is directly applied to XR, power consumption may increase and appropriate discontinuous reception operation may not be implemented.

The present disclosure implements reduction of power consumption and appropriate discontinuous reception operation in conjunction with each other.

A terminal apparatus according to an aspect of the present disclosure includes a controller, and a communicator configured to be controlled by the controller to perform radio communication. For one or more discontinuous reception configurations out of a plurality of discontinuous reception configurations that allow to be configured by a base station apparatus, the controller is configured to transmit preference information indicating whether or not the terminal apparatus is to use the one or more discontinuous reception configurations, to the base station apparatus via the communicator.

A base station apparatus according to an aspect of the present disclosure includes a controller, and a communicator configured to be controlled by the controller to perform radio communication. For one or more discontinuous reception configurations out of a plurality of discontinuous reception configurations that allow to be configured for the terminal apparatus, the controller is configured to receive preference information indicating whether or not a terminal apparatus is to use the one or more discontinuous reception configurations, from the terminal apparatus via the communicator.

A method in a terminal apparatus according to an aspect of the present disclosure includes, for one or more discontinuous reception configurations out of a plurality of discontinuous reception configurations that allow to be configured by a base station apparatus, generating preference information indicating whether or not the terminal apparatus is to use the one or more discontinuous reception configurations, and transmitting the preference information to the base station apparatus.

According to the configuration described above, the terminal apparatus transmits the preference information indicating whether or not the terminal apparatus is to use one or more discontinuous reception configurations, to the base station. Thus, the base station apparatus can be notified as to whether or not the discontinuous reception configuration is necessary in the terminal apparatus for each discontinuous reception configuration. As a result, for example, only unnecessary discontinuous reception configuration(s) out of the plurality of discontinuous reception configurations can be released, and therefore reduction of power consumption and appropriate discontinuous reception operation can be implemented in conjunction with each other. As a result, for example, only necessary discontinuous reception configuration(s) can be maintained or added, and therefore appropriate discontinuous reception operation can be performed with moderated increase of power consumption. Note that, according to the configuration described above, instead of or together with the above effects, other effects may be exerted.

**BRIEF DESCRIPTION OF THE DRAWINGS**

The above and other objects, features, and advantages of the present disclosure will become more apparent in the following detailed description with reference to the accompanying drawings, in which:

Fig. 1 is a diagram illustrating a communication system S according to an embodiment;
Fig. 2 is a diagram illustrating a protocol stack in a U plane according to an embodiment;
Fig. 3 is a diagram illustrating a protocol stack in a C plane according to an embodiment;
Fig. 4 is a block diagram illustrating a schematic hardware configuration of a terminal apparatus 10 according to an embodiment;
Fig. 5 is a block diagram illustrating a schematic functional configuration of the terminal apparatus 10 according to an embodiment;
Fig. 6 is a block diagram illustrating a schematic hardware configuration of a base station apparatus 20 according to an embodiment;
Fig. 7 is a block diagram illustrating a schematic functional configuration of the base station apparatus 20 according to an embodiment;
Fig. 8 is a diagram illustrating a radio frame configuration according to an embodiment;
Fig. 9 is a diagram illustrating radio resource control (RRC) states according to an embodiment;
Fig. 10 is a schematic explanatory diagram of discontinuous reception (DRX) according to an embodiment;
Fig. 11 is an explanatory diagram of a plurality of types of traffic according to an embodiment; and
Fig. 12 is a sequence diagram of a DRX configuration according to an embodiment.

**DETAILED DESCRIPTION**

Hereinafter, embodiments of the present disclosure will be described in detail with reference to the accompanying drawings. Note that, in the Specification and drawings, elements to which similar descriptions are applicable are denoted by the same reference signs, and overlapping descriptions may hence be omitted.

Each embodiment described below is merely an example of a configuration that can implement the present disclosure. Each embodiment described below can be appropriately modified or altered according to a configuration of an apparatus to which the present disclosure is applied and various conditions. All of combinations of elements included in each embodiment described below are not necessarily required to implement the present disclosure, and a part of the elements can be appropriately omitted. Hence, the scope of the present disclosure is not limited by the configuration described in each embodiment described below. Configurations in which a plurality of configurations described in the embodiments below are combined can also be employed unless the configurations are consistent with each other.

1. Embodiments

1.1. Communication System

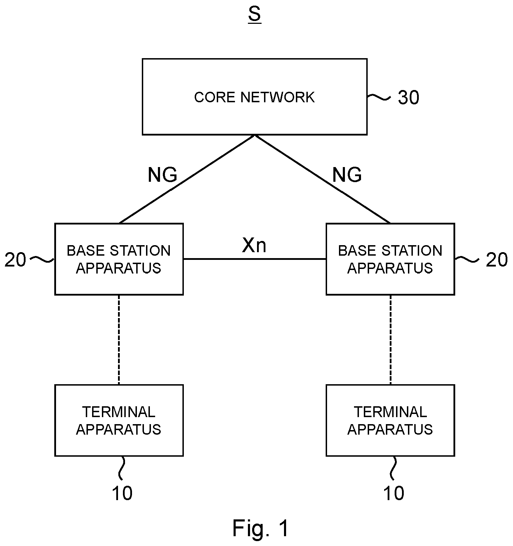

As illustrated in Fig. 1, a communication system S according to an embodiment includes one or more terminal apparatuses 10, one or more base station apparatuses 20, and a core network 30. The communication system S is configured in accordance with predetermined Technical Specifications (TS). For example, the communication system S may conform to Technical Specifications (for example, 5G, 5G Advanced, 6G, and the like) defined in the Third Generation Partnership Project (3GPP).

In the communication system S, a user plane in which user data is transmitted and received and a control plane in which control data is transmitted and received are separately configured. In other words, the communication system S supports C/U split. The user plane is abbreviated to the U plane, and the control plane is abbreviated to the C plane.

The base station apparatus 20 manages at least one cell. The cell configures a minimum unit of a communication area. For example, one cell belongs to one frequency (for example, carrier frequency), and is configured with one component carrier. The term "cell" may represent radio communication resources, and may represent a communication target of the terminal apparatus 10. The base station apparatus 20 performs radio communication with the terminal apparatus 10 existing in the cell of the base station apparatus 20 in the U plane and the C plane. In other words, the base station apparatus 20 terminates a U plane protocol and a C plane protocol for the terminal apparatus 10.

The base station apparatus 20 communicates with the core network 30 in the U plane and the C plane. More specifically, the core network 30 includes a plurality of logical nodes including an Access and Mobility Management Function (AMF) and a User Plane Function (UPF). The base station apparatus 20 connects to the AMF in the C plane, and connects to the UPF in the U plane.

The base station apparatus 20 may be a gNB that provides the terminal apparatus 10 with the U plane and the C plane conforming to 5G New Radio (NR) specifications of 3GPP and connects to a 5G core network (5GC) of 3GPP, for example. The base station apparatus 20 may be an apparatus conforming to other older or newer specifications of 3GPP.

The base station apparatus 20 may be configured by a plurality of unit apparatuses. For example, the base station apparatus 20 may include a central unit (CU), a distributed unit (DU), and a radio unit (RU).

With a configuration in which a plurality of base station apparatuses 20 are connected to each other, a radio access network (RAN) is formed. The radio access network formed by the base station apparatus 20 being a gNB may be referred to as an NG-RAN. The base station apparatus 20 being a gNB may be referred to as an NG-RAN node.

The plurality of base station apparatuses 20 are connected to each other by a predetermined interface (for example, an Xn interface). More specifically, for example, the plurality of base station apparatuses 20 are connected to each other by an Xn-U interface in the U plane, and are connected to each other by an Xn-C interface in the C plane. Note that the plurality of base station apparatuses 20 may be connected to each other by another interface having a different function and name.

Each base station apparatus 20 is connected to the core network 30 by a predetermined interface (for example, an NG interface). More specifically, for example, each base station apparatus 20 is connected to the UPF of the core network 30 by an NG-U interface in the U plane, and is connected to the AMF of the core network 30 by an NG-C interface in the C plane. Note that each base station apparatus 20 may be connected to the core network 30 by another interface having a different function and name.

The terminal apparatus 10 is a device that performs radio communication with the base station apparatus 20 as described above, and may be a user equipment (UE) that operates in accordance with 5G NR specifications of 3GPP, for example. The terminal apparatus 10 may be an apparatus conforming to other older or newer specifications of 3GPP.

The terminal apparatus 10 may be a mobile phone terminal such as a smartphone, a tablet terminal, a notebook computer, a communication module, a communication card, or an IoT device such as a surveillance camera and a robot, for example. The terminal apparatus 10 may be a vehicle (for example, an automobile, a train, or the like), or an apparatus provided in the vehicle. The terminal apparatus 10 may be a transporter (for example, a vessel, an aircraft, or the like) other than the vehicle, or an apparatus provided in the transporter. The terminal apparatus 10 may be a sensor, or an apparatus provided in the sensor. Note that the terminal apparatus 10 may be referred to by another name, such as a terminal, a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, and a remote unit. The terminal apparatus 10 may be an apparatus adapted to one or more of enhanced Mobile Broadband (eMBB), Ultra-Reliable and Low Latency Communications (URLLC), and massive Machine Type Communications (mMTC).

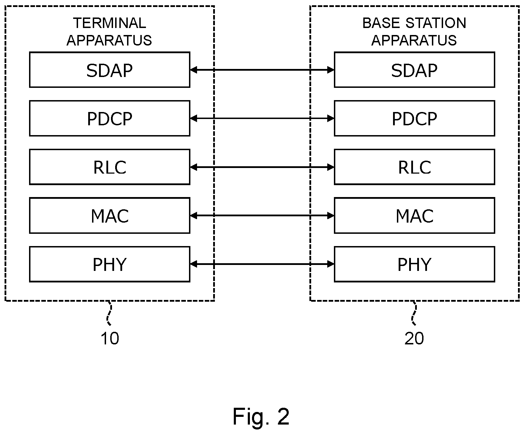

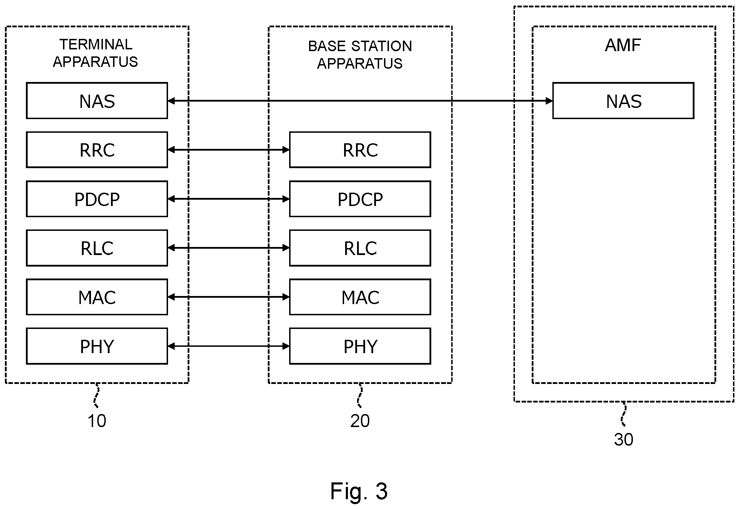

With reference to Fig. 2, a radio protocol architecture between the terminal apparatus 10 and the base station apparatus 20 will be described. With reference to Fig. 3, radio protocol architectures between the terminal apparatus 10 and the base station apparatus 20 and between the terminal apparatus 10 and the core network 30 will be described.

As illustrated in Fig. 2, a protocol stack in the U plane is provided with, in order from the lowest layer, a Physical (PHY) layer, a Media Access Control (MAC) layer, a Radio Link Control (RLC) layer, a Packet Data Convergence Protocol (PDCP) layer, and a Service Data Adaptation Protocol (SDAP) layer. Each of the layers is terminated in the base station apparatus 20 on the network side.

As illustrated in Fig. 3, a protocol stack in the C plane is provided with, in order from the lowest layer, a Physical (PHY) layer, a Media Access Control (MAC) layer, a Radio Link Control (RLC) layer, a Packet Data Convergence Protocol (PDCP) layer, a Radio Resource Control (RRC) layer, and a Non-Access Stratum (NAS). Each of the layers, except the Non-Access Stratum, is terminated in the base station apparatus 20 on the network side. The Non-Access Stratum is terminated in the AMF of the core network 30 on the network side.

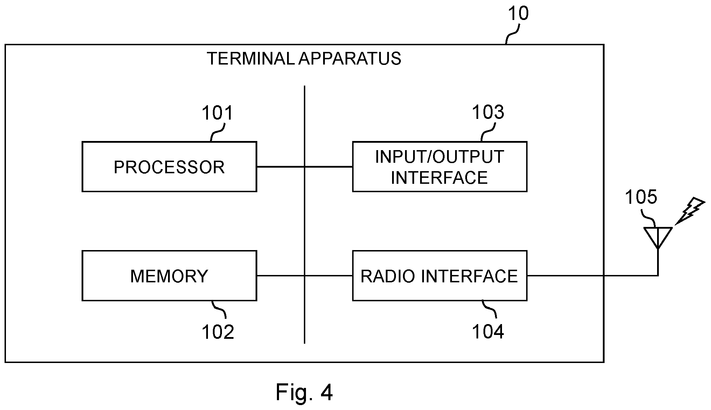

As illustrated in Fig. 4, the terminal apparatus 10 includes, as hardware elements, a processor 101, a memory 102, an input/output interface 103, a radio interface 104, and an antenna 105. The above elements provided in the terminal apparatus 10 are connected to each other via an internal bus. Note that the terminal apparatus 10 may include a hardware element other than the elements illustrated in Fig. 4.

The processor 101 is an arithmetic element that implements various functions of the terminal apparatus 10. The processor 101 may be a central processing unit (CPU), a graphics processing unit (GPU), and a system-on-a-chip (SoC) including an element such as a memory controller.

The memory 102 includes at least one storage medium, such as a random access memory (RAM) and an embedded multi media card (eMMC). The memory 102 is an element that temporarily or permanently stores a program and data used to execute various types of processing in the terminal apparatus 10. The program includes one or more instructions for operations of the terminal apparatus 10. The processor 101 deploys the program stored in the memory 102 into the memory 102 itself and/or a system memory (not illustrated), and executes the program to thereby implement the functions of the terminal apparatus 10.

The input/output interface 103 is an interface that receives an operation to the terminal apparatus 10 and supplies the operation to the processor 101, and presents various pieces of information to a user, and is, for example, a touch panel.

The radio interface 104 is a circuit that executes various types of signal processing for implementing radio communication, and includes a baseband processor and an RF circuit. The radio interface 104 transmits and receives a radio signal to and from the base station apparatus 20 via the antenna 105.

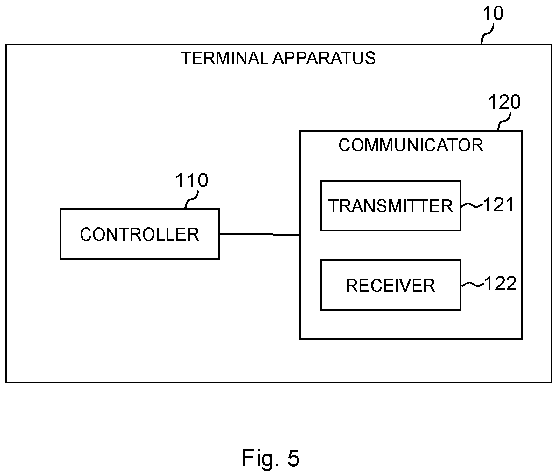

As illustrated in Fig. 5, the terminal apparatus 10 includes, as functional blocks, a controller 110 and a communicator 120. The communicator 120 includes at least one transmitter 121 and at least one receiver 122.

The controller 110 may include at least one processor 101 and at least one memory 102. In other words, the controller 110 may be implemented by the processor 101 and the memory 102. The controller 110 executes various types of control processing in the terminal apparatus 10. For example, the controller 110 controls radio communication with the base station apparatus 20 via the communicator 120.

The communicator 120 includes the radio interface 104 and the antenna 105. In other words, the communicator 120 is implemented by the radio interface 104 and the antenna 105. The communicator 120 transmits and receives a radio signal to and from the base station apparatus 20, and thereby performs radio communication with the base station apparatus 20. A plurality of radio interfaces 104 and a plurality of antennas 105 may be included in the communicator 120.

When the controller 110 operates, the various types of processing of the terminal apparatus 10 according to the present embodiment are executed.

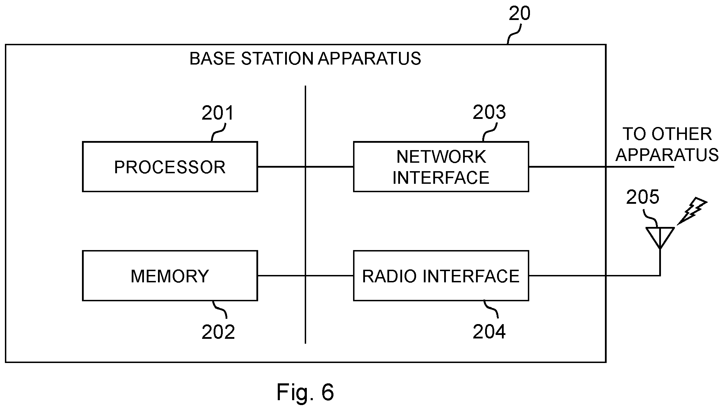

As illustrated in Fig. 6, the base station apparatus 20 includes, as hardware elements, a processor 201, a memory 202, a network interface 203, a radio interface 204, and an antenna 205. The above elements provided in the base station apparatus 20 are connected to each other via an internal bus. Note that the base station apparatus 20 may include a hardware element other than the elements illustrated in Fig. 6.

The processor 201 is an arithmetic element that implements various functions of the base station apparatus 20. The processor 201 may be a CPU, and may further include another processor such as a GPU.

The memory 202 includes at least one storage medium, such as a read only memory (ROM), a RAM, a hard disk drive (HDD), and a solid state drive (SSD). The memory 202 is an element that temporarily or permanently stores a program and data used to execute various types of processing in the base station apparatus 20. The program includes one or more instructions for operations of the base station apparatus 20. The processor 201 deploys the program stored in the memory 202 into the memory 202 itself and/or a system memory (not illustrated), and executes the program to thereby implement the functions of the base station apparatus 20.

The network interface 203 is an interface used to transmit and receive a signal to and from another base station apparatus 20 and the core network 30.

The radio interface 204 is a circuit that executes various types of signal processing for implementing radio communication, and includes a baseband processor and an RF circuit. The radio interface 204 transmits and receives a radio signal to and from the base station apparatus 20 via the antenna 205.

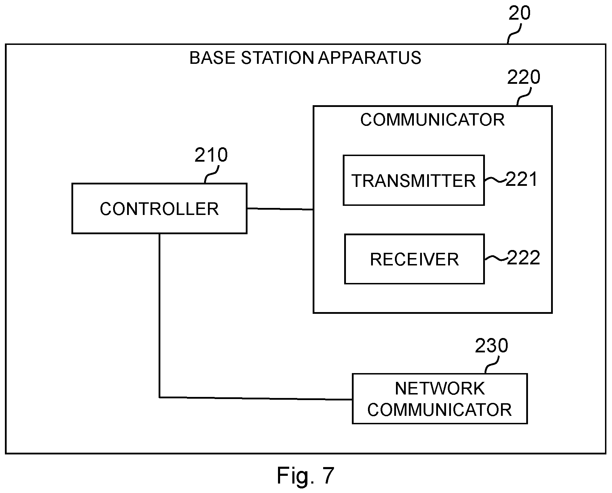

As illustrated in Fig. 7, the base station apparatus 20 includes, as functional blocks, a controller 210, a communicator 220, and a network communicator 230. The communicator 220 includes at least one transmitter 221 and at least one receiver 222.

The controller 210 may include at least one processor 201 and at least one memory 202. In other words, the controller 210 may be implemented by the processor 201 and the memory 202. The controller 210 executes various types of control processing in the base station apparatus 20. For example, the controller 210 controls radio communication with the terminal apparatus 10 via the communicator 220. For example, the controller 210 controls communication with another node (for example, another base station apparatus 20, a node of the core network 30) via the network communicator 230.

The communicator 220 includes the radio interface 204 and the antenna 205. In other words, the communicator 220 is implemented by the radio interface 204 and the antenna 205. The communicator 220 transmits and receives a radio signal to and from the terminal apparatus 10, and thereby performs radio communication with the terminal apparatus 10. A plurality of radio interfaces 204 and a plurality of antennas 205 may be included in the communicator 220.

The network communicator 230 includes the network interface 203. In other words, the network communicator 230 is implemented by the network interface 203. The network interface 203 transmits and receives a signal to and from the network (ultimately, another node described above).

When the controller 210 operates, the various types of processing of the base station apparatus 20 according to the present embodiment are executed.

1.2. Radio Resources

The terminal apparatus 10 and the base station apparatus 20 perform radio communication with each other, using radio resources in the frequency domain and the time domain. The radio resources will be described below.

A transmission method of downlink communication from the base station apparatus 20 to the terminal apparatus 10 is, for example, orthogonal frequency division multiplexing (OFDM) using a cyclic prefix (CP), that is, CP-OFDM. A transmission method of uplink communication from the terminal apparatus 10 to the base station apparatus 20 is, for example, CP-OFDM described above, or DFTS-OFDM in which CP-OFDM is applied subsequently to transform precoding for performing discrete Fourier transform (DFT) spreading.

The cyclic prefix is a redundant signal that functions as a guard period for preventing inter-symbol interference and inter-carrier interference, and is inserted at the start of an OFDM symbol. Types of the cyclic prefix include a normal cyclic prefix and an extended cyclic prefix.

As the radio resources in the frequency domain of OFDM, a plurality of subcarriers being orthogonal to each other are used. The plurality of subcarriers are allocated with a predetermined subcarrier spacing (sub-carrier spacing (SCS)) Δf in the frequency domain. In the communication system S, a plurality of subcarrier spacings Δf may be applied. The subcarrier spacing Δf is expressed by the following expression, for example.

$$\Delta f = 2^{\mu} \cdot 15 \; [\text{kHz}]$$

Here, μ is an integer of 0 or greater, and may be any one of values of 0, 1, 2, 3, 4, 5, and 6. Accordingly, the subcarrier spacing Δf [kHz] may be any one of values of 15, 30, 60, 120, 240, 480, and 960. Note that μ may be a value of 7 or greater.

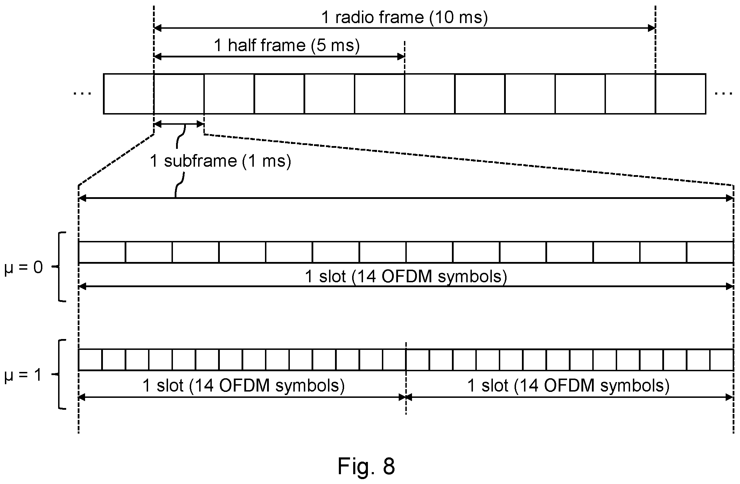

In the time domain of OFDM, as illustrated in Fig. 8, a hierarchical radio frame configuration is used. One radio frame includes 10 subframes. One radio frame is divided into two half frames. A time length of the radio frame is 10 ms, a time length of the half frame is 5 ms, and a time length of the subframe is 1 ms. The above time lengths are not dependent upon the subcarrier spacing Δf.

One subframe includes one or more slots. The number Ns of slots included in one subframe is dependent upon the value of μ described above, ultimately the subcarrier spacing Δf. The number Ns of slots is expressed by the following expression, for example.
Ns = $2^{\mu}$

One slot includes a plurality of symbols. The number of symbols included in one slot is dependent upon the type of cyclic prefix. For example, in a configuration in which the normal cyclic prefix is used, one slot includes 14 symbols. For example, in a configuration in which the extended cyclic prefix is used, one slot includes 12 symbols.

As described above, the number of slots and the number of symbols included in each of the radio frame, the half frame, and the subframe having a fixed time length are variable. Accordingly, the time length of the slot and the time length of the symbol are also variable.

A resource element (RE) is a radio resource unit in the time-frequency domain including one subcarrier and one symbol. A resource block (RB) is a radio resource unit in the time-frequency domain including 12 subcarriers and a plurality of symbols.

The radio frames are assigned system frame numbers (SFNs) counted up from 0 to 1023 in increments of 1. SFN 0 is assigned to a radio frame that follows a radio frame assigned SFN 1023. The time length of the radio frame is 10 ms, and accordingly one period of the system frame number is 10240 ms (= 10.24 seconds).

Furthermore, a hyper-system frame number (H-SFN) may be used. The hyper-system frame number is a number counted up from 0 to 1023 in increments of 1 in each period of the system frame number. One period of the system frame number is 10.24 seconds, and accordingly one period of the hyper-system frame number is 10485.76 seconds (≈ 2.91 hours).

Here, the base station apparatus 20 may configure one or a plurality of serving cells for the terminal apparatus 10. The serving cell may correspond to a downlink component carrier and/or an uplink component carrier. A technology in which one or a plurality of serving cells are configured and the base station apparatus 20 and the terminal apparatus 10 perform radio communication may also be referred to as carrier aggregation.

The base station apparatus 20 may configure one or a plurality of bandwidth parts (BWPs) for the terminal apparatus 10 for each of one or a plurality of serving cells. For example, in the downlink of one serving cell, a downlink bandwidth part (DL-BWP) may be configured. In the uplink of one serving cell, an uplink bandwidth part (UL-BWP) may be configured. Here, the DL-BWP may include an initial DL-BWP and/or a dedicated DL-BWP. The UL-BWP may include an initial UL-BWP and/or a dedicated UL-BWP. In the following, the BWP may include the DL-BWP and/or the UL-BWP.

1.3. Channels and Control Information

The terminal apparatus 10 and the base station apparatus 20 transmit and receive user data and control information to and from each other. Transmission and reception of downlink and uplink control information will be illustrated below.

The terminal apparatus 10 and the base station apparatus 20 transmit and receive user data and control information, using a plurality of hierarchical channels. A physical channel is a channel used for physical communication between the terminal apparatus 10 and the base station apparatus 20. Examples of physical channels include a physical downlink control channel (PDCCH), a physical broadcast channel (PBCH), and a physical uplink control channel (PUCCH).

A transport channel is a channel located higher than the physical channel, and is mapped to the physical channel in the PHY layer. A plurality of transport channels may be mapped to one physical channel. Examples of transport channels include a downlink shared channel (DL-SCH) and an uplink shared channel (UL-SCH). For example, downlink data may also be referred to as DL-SCH data. For example, uplink data may also be referred to as UL-SCH data. Here, the DL-SCH data includes downlink user data. The UL-SCH data includes uplink user data.

A logical channel is a channel located higher than the transport channel, and is mapped to the transport channel in the MAC layer. A plurality of logical channels may be mapped to one transport channel, and one logical channel may be mapped to a plurality of transport channels. The logical channels are classified by characteristics of information to be transmitted. Examples of logical channels include a broadcast control channel (BCCH), a common control channel (CCCH), and a dedicated control channel (DCCH).

The base station apparatus 20 transmits downlink control information (DCI) to the terminal apparatus 10, using the PDCCH being a physical channel. The DCI includes information related to downlink and uplink resource allocations to the terminal apparatus 10 and other control information of the terminal apparatus 10. The DCI is mapped to the PDCCH, and corresponds to layer 1 signaling.

Here, regarding transmission of the DCI on the PDCCH, one or a plurality of formats may be defined. A format defined regarding transmission of the DCI on the PDCCH may be referred to as a DCI format. For example, the DCI format may include a DCI format (for example, a format referred to as DCI format 1_0, DCI format 1_1, and/or DCI format 1_2) used for scheduling of a physical downlink shared channel (PDSCH). For example, the DCI format may include a DCI format (for example, a format referred to as DCI format 0_0, DCI format 0_1, and/or DCI format 0_2) used for scheduling of a physical uplink shared channel (PUSCH). The DCI format may include a DCI format not used for scheduling of the PDSCH and/or the PUSCH. The DCI format used for scheduling of the PDSCH and/or the PUSCH may be referred to as a scheduling DCI format. The DCI format not used for scheduling of the PDSCH and/or the PUSCH may be referred to as a non-scheduling DCI format. In the present embodiment, for the sake of simplicity of description, the "DCI format" may be simply referred to as the "PDCCH". The "DCI generated according to the DCI format" may be simply referred to as the "DCI format".

For example, the base station apparatus 20 may configure frequency domain resources and/or time domain resources for the terminal apparatus 10 to monitor a PDCCH candidate set. For example, the frequency domain resources in which the terminal apparatus 10 monitors the PDCCH candidate set may be referred to as a control resource set (CORESET). The time domain resources in which the terminal apparatus 10 monitors the PDCCH candidate set may be referred to as a search space set (SSS). The terminal apparatus 10 may monitor the PDCCH candidate set in one or a plurality of CORESETs in the DL-BWP of the serving cell configured with PDCCH monitoring according to a corresponding search space set. Here, to monitor may connote to attempt to decode each of the PDCCH candidates according to the monitored DCI format. The configuration described above may be referred to as blind decoding.

Here, a cyclic redundancy check (CRC) scrambled using a radio network temporary identifier (RNTI) may be added to the DCI (or the DCI format) to be transmitted on the PDCCH. The CRC may also be referred to as a CRC parity bit. A plurality of types of RNTIs are defined. For example, the base station apparatus 20 may transmit an RRC message including at least one of information indicating a Cell-RNTI (C-RNTI), information indicating a Modulation and Coding Scheme Cell-RNTI (MCS-C-RNTI), and information indicating a Configured Scheduling-RNTI (CS-RNTI) to thereby configure each RNTI. In other words, a CRC scrambled using at least one of the C-RNTI, the MCS-C-RNTI, and the CS-RNTI may be added to the DCI (or the DCI format) to be transmitted on the PDCCH.

In other words, the terminal apparatus 10 may monitor (and/or receive) the PDCCH and detect (and/or receive) the DCI format. Here, as will be described later, the terminal apparatus 10 may monitor (and/or receive) the PDCCH in an active time in DRX operation.

The terminal apparatus 10 transmits uplink control information (UCI) to the base station apparatus 20, using the PUCCH being a physical channel. The UCI includes control information, such as a scheduling request (SR), an Ack/Nack of a hybrid automatic repeat request (HARQ), and channel state information (CSI). The UCI is mapped to the PUCCH or the PUSCH, and corresponds to layer 1 signaling.

The base station apparatus 20 transmits a control element (CE) of the MAC layer to the terminal apparatus 10, using the DL-SCH being a transport channel. A downlink MAC CE includes control information such as a DRX (described later) command. The downlink MAC CE is mapped to the PDSCH via the DL-SCH, and corresponds to layer 2 signaling.

The terminal apparatus 10 transmits a control element (CE) of the MAC layer to the base station apparatus 20, using the UL-SCH being a transport channel. An uplink MAC CE includes control information such as a buffer status report (BSR). The uplink MAC CE is mapped to the PUSCH via the UL-SCH, and corresponds to layer 2 signaling.

The base station apparatus 20 transmits (or broadcasts) system information (SI) to the terminal apparatus 10, using the BCCH being a logical channel. The SI includes minimum system information (MSI) and other system information (OSI). The MSI includes a master information block (MIB) and a system information block 1 (SIB1). The SIB1 may be referred to as remaining minimum system information (RMSI). The OSI includes system information blocks (from SIB2), other than the SIB1. Of the BCCH, the MIB is mapped to the PBCH via the broadcast channel (BCH), and the SIB is mapped to the PDSCH via the DL-SCH.

The base station apparatus 20 transmits control information in the RRC layer to the terminal apparatus 10, using a signaling radio bearer (SRB) established between the terminal apparatus 10 and the base station apparatus 20 in the RRC layer. A message exchanged between the base station apparatus 20 and the terminal apparatus 10 in the RRC layer may be hereinafter referred to as an RRC message. A plurality of types of SRBs (for example, SRB0, SRB1, SRB2, SRB3, and SRB4) are present. The SRB is used to transmit and receive a NAS message including control information in the NAS layer, other than the RRC message. To transmit the RRC message from the base station apparatus 20 to the terminal apparatus 10, the CCCH or the DCCH is used. The CCCH and the DCCH are each mapped to the PDSCH via the DL-SCH. The RRC message corresponds to layer 3 signaling.

As an example of a downlink RRC message, an RRC reconfiguration (RRCReconfiguration) message will be described. The RRC reconfiguration message is an RRC message transmitted from the base station apparatus 20 to the terminal apparatus 10 using SRB1 or SRB3. The DCCH is used to transmit the RRC reconfiguration message. The RRC reconfiguration message is used to perform reconfiguration or modification of connection between the base station apparatus 20 and the terminal apparatus 10.

The terminal apparatus 10 transmits the RRC message to the base station apparatus 20, using the SRB described above. To transmit the RRC message from the terminal apparatus 10 to the base station apparatus 20, the CCCH or the DCCH is used. The CCCH and the DCCH are each mapped to the PUSCH via the UL-SCH. The RRC message corresponds to layer 3 signaling.

As an example of an uplink RRC message, a user equipment capability information (UECapabilityInformation) message will be described. The user equipment capability information message is an RRC message transmitted from the terminal apparatus 10 to the base station apparatus 20 using SRB1. The DCCH is used to transmit the user equipment capability information message. The user equipment capability information message is used to notify the base station apparatus 20 of information related to a radio access capability of the terminal apparatus 10.

As an example of an uplink RRC message, a user equipment assistance information (UEAssistanceInformation) message will be described. The user equipment assistance information message is an RRC message transmitted from the terminal apparatus 10 to the base station apparatus 20 using SRB1 or SRB3. The DCCH is used to transmit the user equipment assistance information message. The user equipment assistance information message is used to notify the base station apparatus 20 of various pieces of information (UE assistance information) related to the terminal apparatus 10.

1.4. Radio Resource Control (RRC) States

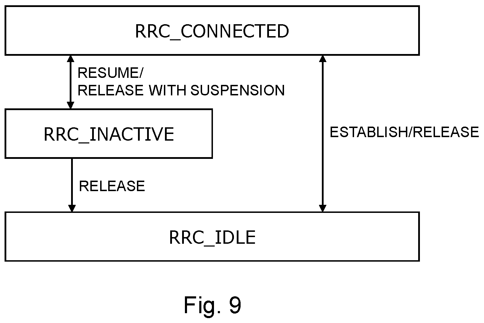

As illustrated in Fig. 9, the terminal apparatus 10 has one of three radio resource control (RRC) states of RRC connected (RRC_CONNECTED), RRC inactive (RRC_INACTIVE), and RRC idle (RRC_IDLE).

The RRC connected (RRC_CONNECTED) state is a state in which connection (RRC context) between the terminal apparatus 10 and the base station apparatus 20 is established, and the terminal apparatus 10 transmits and receives a radio signal to and from the base station apparatus 20. In the RRC inactive (RRC_INACTIVE) state, although connection (RRC context) between the terminal apparatus 10 and the base station apparatus 20 is maintained, the terminal apparatus 10 does not transmit and receive a radio signal to and from the base station apparatus 20. In the RRC idle (RRC_IDLE) state, connection (RRC context) between the terminal apparatus 10 and the base station apparatus 20 is released.

Power consumption of the terminal apparatus 10 increases in order of the RRC idle (RRC_IDLE) state, the RRC inactive (RRC_INACTIVE) state, and the RRC connected (RRC_CONNECTED) state.

1.5. Discontinuous Reception (DRX)

As a technology for reducing power consumption of the terminal apparatus 10, discontinuous reception (DRX) is used. DRX may be applied to the terminal apparatus 10 in the RRC idle state and the RRC connected state. DRX in the RRC connected state is referred to as connected mode discontinuous reception (CDRX).

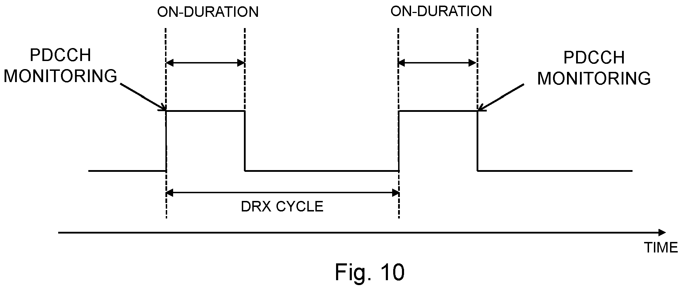

As schematically illustrated in Fig. 10, in a case where DRX is configured (or set), the terminal apparatus 10 need not keep continuously monitoring the PDCCH, and monitors the PDCCH only in a predetermined on-duration. In other words, the on-duration may be a duration in which the terminal apparatus 10 waits to receive one or more PDCCHs (that is, PDCCH(s)). For example, the terminal apparatus 10 may wait to receive one or more PDCCHs in the on-duration after waking up. In a case where the terminal apparatus 10 successfully decodes the PDCCH, the terminal apparatus 10 may continue to monitor the PDCCH and start a timer (inactivity timer). Here, repetitions (for example, periodic repetitions) of the duration (on-duration) may be configured using a predetermined cycle (a DRX cycle, a DRX period).

In DRX in the RRC idle state, the terminal apparatus 10 discontinuously monitors the PDCCH and receives a paging message for calling the terminal apparatus 10, for example. In CDRX, the terminal apparatus 10 discontinuously monitors the PDCCH and receives resource allocation information (that is, the DCI format used for scheduling of the PDSCH and/or the PUSCH), for example. DRX may employ a configuration in which short DRX having a short cycle is first performed and long DRX having a long cycle is then performed.

A part or all of DRX parameters used to configure DRX for the terminal apparatus 10 may be transmitted from the base station apparatus 20 to the terminal apparatus 10, using an RRC message. In other words, the base station apparatus 20 may transmit the RRC message including the part or all of the DRX parameters to the terminal apparatus 10. Here, the part or all of the DRX parameters may be configured for a cell group including one or a plurality of serving cells. In other words, the base station apparatus 20 may configure the cell group including one or a plurality of serving cells, and configure the part or all of the DRX parameters for the configured cell group. For example, the base station apparatus 20 may transmit an RRC message including information for configuring the cell group to the terminal apparatus 10. Here, the cell group may be a cell group for configuring MAC parameters. The cell group may be referred to as a master cell group and/or a secondary cell group. The cell group may be referred to as a DRX group.

The terminal apparatus 10 receives the RRC message including the part or all of the DRX parameters, and controls the DRX operation, based on the part or all of the DRX parameters. In other words, the terminal apparatus 10 may control the DRX operation for each cell group, based on the part or all of the DRX parameters. Particularly, a DRX-Config IE being an example of an RRC information element (IE) may include the part or all of the DRX parameters, and RRCReconfiguration being an RRC message including the DRX-Config IE may be transmitted from the base station apparatus 20 to the terminal apparatus 10. The part or all of the DRX parameters may be included in other IEs.

Here, a part of the DRX parameters may be configured to be common to the cell groups. In other words, a part of the DRX parameters may be configured as parameter(s) common to one or a plurality of cell groups without being configured for each of the cell groups.

The DRX parameters used to configure (or set) DRX for the terminal apparatus 10 will be illustrated below. Note that the DRX parameters may be referred to as a set of DRX parameters or information related to the DRX. Owing to the DRX parameters, a DRX configuration is configured (that is, defined, determined, or identified). For example, the DRX configuration may include at least one of the on-duration, the timer (inactivity timer), and/or the cycle (that is, the DRX cycle or the DRX period).

- An on-duration timer indicating a time length of the on-duration of the terminal apparatus 10 (drx-onDurationTimer). The DRX parameter is used to configure a value of the on-duration. For example, using drx-onDurationTimer, a duration at the time of starting the DRX cycle may be configured.
- An inactivity timer indicating a duration of maintaining an on-state after the terminal apparatus 10 receives the PDCCH (that is, a duration until the state changes to an off-state) (drx-InactivityTimer). The DRX parameter may correspond to a value of the timer (inactivity timer). For example, using drx-InactivityTimer, a duration after reception of the PDCCH (that is, a PDCCH occasion) for indicating new DL transmission and/or UL transmission may be configured.

- A cycle (for example, a short cycle) of the on-duration in short DRX (drx-ShortCycle). The DRX parameter may correspond to the cycle (the DRX cycle, the DRX period) in short DRX.
- A short cycle timer indicating a duration of short DRX (drx-ShortCycleTimer). For example, using drx-ShortCycleTimer, a duration conforming to the short DRX cycle may be configured for the terminal apparatus 10.
- A cycle (for example, a long cycle) of the on-duration of long DRX and/or a start offset indicating a start position (for example, a subframe and/or a slot) of DRX (drx-LongCycleStartOffset). The DRX parameter may correspond to the cycle (the DRX cycle or the DRX period) in long DRX. For example, using drx-LongCycleStartOffset, the position to start the long DRX cycle and/or the short DRX cycle may be configured.
- A slot offset indicating a delay before the on-duration is started (drx-SlotOffset). For example, using drx-SlotOffset, a delay before the on-duration timer (drx-onDurationTimer) is started may be configured.

In normal DRX (including CDRX), time allocation of the on-duration is specified depending on the system frame number (SFN) and the subframe number. As described above, one period of the system frame number is 10240 ms (= 10.24 seconds). When such one period ends, the SFN returns to 0.

To introduce a longer time range in DRX, extended discontinuous reception (extended DRX (eDRX)) may be applied. In eDRX, time allocation of the on-duration is specified using the hyper-system frame number described above as well as the system frame number (SFN) and the subframe number. As described above, one period of the hyper-system frame number is 10485.76 seconds ($\approx$ 2.91 hours), and accordingly a longer time range can be used in eDRX.

1.6. Extended Reality (XR)

Characteristics of traffic generated in XR will be described. In XR, a plurality of types of data (video data, audio data, user data, control data, and the like) are transmitted and received in parallel. A plurality of data streams corresponding to the data segments have different traffic characteristics and quality of service (QoS) requirements.

At timings of transmission and reception of the data, time shifts expressed as jitter, variability, and fluctuation may occur due to factors such as encoding of a video and audio and network delay.

Video data is transmitted and received with reference to a frame rate expressed in "frame per second (FPS)". For example, data for one frame is transmitted and received every 16.67 ms in a case of 60 FPS and every 8.33 ms in a case of 120 FPS.

1.7. Characteristics of XR Traffic and DRX

The terminal apparatus 10 compatible with XR receives a plurality of data streams having different traffic characteristics. Note that the "data stream(s)" may be expressed by word(s) expressing a series of signals transmitted and received in time series, such as data flow(s), traffic(s), and traffic flows.

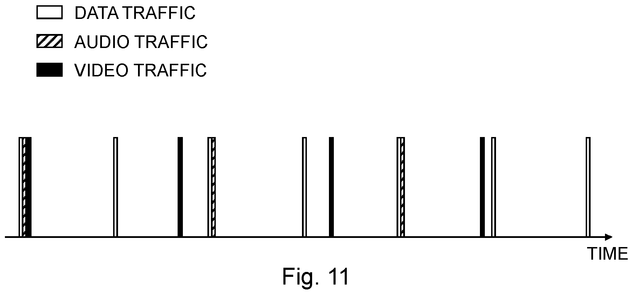

As illustrated in Fig. 11, for example, the terminal apparatus 10 receives a plurality of types of traffic. The plurality of types of traffic includes data traffic that arrives in a periodicity of 10 ms, audio traffic that arrives in a periodicity of 20 ms, and video traffic that arrives in a periodicity of 16.67 ms. In other words, each traffic has a traffic periodicity different from other traffic.

The plurality of types of traffic may include various other types of traffic. For example, the terminal apparatus 10 may receive intra-coded frames being key frames that are not based on prediction and predicted frames that are predicted based on the intra-coded frames.

As described above, in a case where a plurality of types of traffic arrive in the terminal apparatus 10 in parallel, the terminal apparatus 10 assumes to perform DRX described above. While the cycle related to DRX is fixed, as illustrated in Fig. 11, the plurality of traffics arrive in the terminal apparatus 10 aperiodically. Thus, for the terminal apparatus 10 to thoroughly receive the plurality of traffics with a single DRX configuration (that is, a set of DRX parameters), it is necessary to configure the on-duration of the terminal apparatus 10 to be longer. As a result, there is a technical problem that power consumption of the terminal apparatus 10 increases.

1.8. Plurality of Discontinuous Reception (DRX) Configurations

From the above reason, a plurality of DRX configurations are configured for the terminal apparatus 10. To identify the plurality of DRX configurations, a configuration identifier may be configured for each DRX configuration. One DRX configuration corresponds to one DRX-Config IE including the plurality of DRX parameters as described above in Section 1.5., for example. As the DRX parameters, the configuration identifiers for identifying the DRX configurations may be included in the DRX configurations.

For example, DRX configuration 1 corresponding to the data traffic that arrives in a periodicity of 10 ms, DRX configuration 2 corresponding to the audio traffic that arrives in a periodicity of 20 ms, and DRX configuration 3 corresponding to the video traffic that arrives in a periodicity of 16.67 ms may be configured for the terminal apparatus 10. For example, the cycle of the on-duration may be configured as 10 ms in DRX configuration 1, the cycle of the on-duration may be configured as 20 ms in DRX configuration 2, and the cycle of the on-duration may be configured as 16.67 ms in DRX configuration 3.

In a case where the plurality of DRX configurations are configured for the terminal apparatus 10, the terminal apparatus 10 monitors the PDCCH in the on-duration specified by one of the DRX configurations. Thus, in a case where DRX configurations 1 to 3 above are configured for the terminal apparatus 10, the terminal apparatus 10 monitors the PDCCH in the on-duration specified by one of the configurations of DRX configuration 1, DRX configuration 2, and DRX configuration 3. Note that, even in the on-duration specified by the plurality of DRX configurations, the terminal apparatus 10 may perform normal PDCCH monitoring operation.

In an XR application, a data stream or traffic to be received is assumed to vary. For example, in a case where a user using the terminal apparatus 10 deactivates a video function, the terminal apparatus 10 no longer needs to receive the video traffic. This further obviates the need for the DRX configuration corresponding to the video traffic.

In a case where individual DRX configurations cannot be changed separately, the terminal apparatus 10 performs reception operation (PDCCH monitoring) for unnecessary traffic, based on an unnecessary DRX configuration. As a result, there is a technical problem that power consumption of the terminal apparatus 10 increases.

It is naturally understood that the technical problem is not limited to XR and also arises in other technologies in which a plurality of data streams having different traffic characteristics are received.

1.9. Terminal Apparatus 10 Transmits Preference Information related to DRX Configurations

In view of this, for example, the terminal apparatus 10 according to the present embodiment is configured to transmit preference information related to each of one or more discontinuous reception configurations out of a plurality of discontinuous reception configurations configured by the base station apparatus 20 to the base station apparatus 20 via the communicator 120. In an example of the embodiment, for one or more discontinuous reception configurations out of a plurality of discontinuous reception configurations configured by the base station apparatus 20, the terminal apparatus 10 is configured to transmit preference information indicating whether or not the terminal apparatus 10 is to use the one or more discontinuous reception configurations, to the base station apparatus 20 via the communicator 120. Note that processing performed by the processor 101 or the controller 110 of the terminal apparatus 10 may be simply described as processing performed by the terminal apparatus 10. Processing performed by the processor 201 or the controller 210 of the base station apparatus 20 may be simply described as processing performed by the base station apparatus 20.

The above-described words "indicate whether or not to use" are a concept including "indicate to use" and "indicate not to use" throughout the present application. "To use" may mean to continue to use the current configuration, that is, "to maintain". "To use" may mean to use another configuration in addition to the current configuration, that is, "to add (addition)". "To use" may mean to stop the current configuration and use another configuration, that is, "to modify (modification)". "To use" may mean to use (should use) a new configuration, that is, "to require (requirement)". "Not to use" may mean to stop use of the current configuration, that is, "to release" or "to delete (deletion)". Furthermore, "to use" and "not to use" may mean other similar words or relevant words that are different from the above-described words. For example, the preference information may be information indicating a preference in the terminal apparatus 10 regarding "use", "maintenance", "addition", "modification", "requirement", "release", and/or "deletion" for each of one or more discontinuous reception configurations. The preference information may be information indicating a preference in the terminal apparatus 10 regarding "use", "maintenance", "addition", "modification", "requirement", "release", and/or "deletion" for each of one or more DRX parameters included in each of one or more discontinuous reception configurations. Here, one or more DRX parameters may be value(s) of one or more DRX parameters.

The above-described word "transmit" includes a similar concept, such as "notify", "provide", "transmit", and "carry", throughout the present application.

An RRC message to be described later may be an RRC message described in NPL 2, or may be an RRC message to be newly defined. An IE included in the RRC message to be described later may be an IE described in NPL 2, or may be an IE to be newly defined.

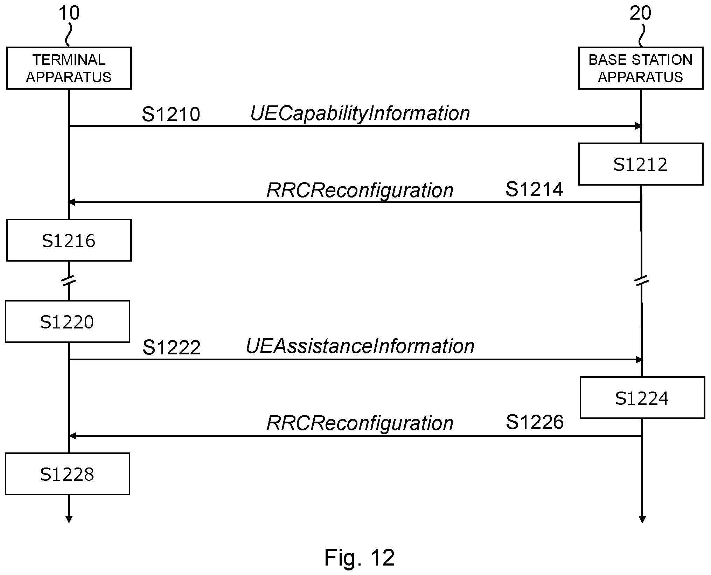

As illustrated in Fig. 12, in Step S1210, the terminal apparatus 10 transmits, to the base station apparatus 20, a user equipment capability information (UECapabilityInformation) message including information indicating that a plurality of DRX configurations are configurable for the terminal apparatus 10. The user equipment capability information message is generated by the terminal apparatus 10. The information included in the user equipment capability information message may indicate that the terminal apparatus 10 is compatible with the plurality of DRX configurations (that is, supports the plurality of DRX configurations), or may indicate the number (for example, a maximum number) of DRX configurations supported by the terminal apparatus 10. Another RRC message may be used in place of the user equipment capability information message. For example, the terminal apparatus 10 may transmit the user equipment capability information message including the information indicating support of a configuration of the plurality of DRX configurations for a certain cell group to the base station apparatus 20.

Note that, in a case where the terminal apparatus 10 included in the communication system S is compatible with the plurality of DRX configurations by default, Step S1210 may be omitted.

In Step S1212, based on the user equipment capability information message (or another RRC message) received from the terminal apparatus 10, the base station apparatus 20 configures the base station apparatus 20 with the DRX configurations on the base station side corresponding to the plurality of DRX configurations to be configured for the terminal apparatus 10.

In Step S1214, the base station apparatus 20 transmits an RRC reconfiguration (RRCReconfiguration) message including the information indicating the plurality of DRX configurations to be configured for the terminal apparatus 10 to the terminal apparatus 10. For example, the base station apparatus 20 may transmit the RRC reconfiguration message including the information indicating the plurality of DRX configurations for the certain cell group to the terminal apparatus 10. In other words, the plurality of DRX configurations may be configured for the certain cell group (that is, each of the cell groups). The terminal apparatus 10 may identify the plurality of DRX configurations for the certain cell group (that is, each of the cell groups). The RRC reconfiguration message is generated by the base station apparatus 20. The configuration identifier for identifying the DRX configuration is assigned to each of the plurality of DRX configurations. Such a plurality of configuration identifiers may be configured with priorities. Another RRC message may be used in place of the RRC reconfiguration message.

Each of the plurality of DRX configurations includes one or more DRX parameters. The DRX parameter(s) included in each DRX configuration may include at least one of the on-duration timer (drx-onDurationTimer), the inactivity timer (drx-InactivityTimer), the long cycle and the start offset (drx-LongCycleStartOffset), and the slot offset (drx-SlotOffset) described above. The DRX parameter(s) included in each DRX configuration may include the configuration identifier for identifying the DRX configuration described above. The DRX parameter(s) included in each DRX configuration is (are) also referred to as individual DRX parameter(s). Here, the terminal apparatus 10 may transmit the preference information related to each of the one or more DRX parameters included in each of the plurality of DRX configurations configured by the base station apparatus 20 to the base station apparatus 20.

In place of or in addition to the configuration identifier for each DRX configuration, the parameter identifier(s) for identifying each of the DRX parameter(s) included in each DRX configuration may be assigned to the DRX parameter(s).

There may be a DRX parameter configured to be common to the plurality of DRX configurations. The DRX parameter configured to be common to the plurality of DRX configurations is also referred to as a common DRX parameter. For example, regarding a certain DRX parameter, a parameter included in the DRX configuration assigned the configuration identifier having the highest priority may be used to be common to the plurality of DRX configurations. The common DRX parameter may be overwritten by individual DRX parameters (that is, in a case where individual DRX parameters are not configured, the common parameter may be applied). On the other hand, even in a case where individual DRX parameters are specified, the common DRX parameter may be prioritized. The priorities of the DRX configurations may be explicitly configured as the priorities of the configuration identifiers, or may be implicitly configured based on at least one DRX parameter included in the DRX configurations.

The plurality of DRX configurations may respectively correspond to the plurality of types of traffic described above. For example, as described above, the plurality of DRX configurations may include DRX configuration 1 including the parameter of the cycle of the on-duration corresponding to the data traffic, DRX configuration 2 including the parameter of the cycle of the on-duration corresponding to the audio traffic, and DRX configuration 3 including the parameter of the cycle of the on-duration corresponding to the video traffic. The on-durations may be different from each other.

In Step S 1214, the base station apparatus 20 may transmit indication information for indicating transmission of the preference information related to the DRX configuration(s) to the terminal apparatus 10. The indication information is generated by the base station apparatus 20.

Here, the base station apparatus 20 may transmit the indication information (hereinafter first indication information) for indicating transmission of the preference information related to one DRX configuration to the terminal apparatus 10. For example, the base station apparatus 20 may transmit the first indication information for indicating transmission of the user equipment assistance information message on the preference information related to one DRX configuration for one certain cell group to the terminal apparatus 10. Based on reception of the first indication information, the terminal apparatus 10 may consider to be configured to transmit the preference information related to the one DRX configuration for the one certain cell group (that is, this may be expressed that the terminal apparatus 10 is configured as described above).

The base station apparatus 20 may transmit the indication information (hereinafter second indication information) for indicating transmission of the preference information related to the plurality of DRX configurations to the terminal apparatus 10. Here, the first indication information and the second indication information may be different information. For example, the base station apparatus 20 may transmit the second indication information for indicating transmission of the user equipment assistance information message on the preference information related to the plurality of DRX configurations (for example, each of the plurality of DRX configurations, each of the plurality of DRX parameters) for one certain cell group to the terminal apparatus 10. Based on reception of the second indication information, the terminal apparatus 10 may consider to be configured to transmit the preference information related to the plurality of DRX configurations for the one certain cell group (that is, this may be expressed that the terminal apparatus 10 is configured as described above).

For example, the base station apparatus 20 may transmit the RRC message including the first indication information and/or the second indication information to the terminal apparatus 10. Based on the first indication information, the terminal apparatus 10 may transmit the user equipment assistance information message including the preference information related to one DRX configuration for one certain cell group. Based on the second indication information, the terminal apparatus 10 may transmit the user equipment assistance information message including the preference information related to the plurality of DRX configurations (for example, each of the plurality of DRX configurations, each of the plurality of DRX parameters) for one certain cell group.

The base station apparatus 20 may transmit a prohibit timer indicating the duration for prohibiting the terminal apparatus 10 from performing (re)transmission of the preference information to the terminal apparatus 10. In other words, the prohibit timer may be information related to the timer for transmission of the user equipment assistance information message including the preference information related to the DRX configuration(s). The prohibit timer is a timer triggered by transmission of the preference information in the terminal apparatus 10. For example, in a case where the preference information for a certain cell group is different from last transmitted preference information and the prohibit timer is not running, the terminal apparatus 10 may start the timer (that is, the timer of the value indicated by the prohibit timer). The prohibit timer may be configured for each of the plurality of DRX configurations. For example, the base station apparatus 20 may transmit the RRC message including the prohibit timer for each of the plurality of DRX configurations. Based on the prohibit timer configured for each of the plurality of DRX configurations, the terminal apparatus 10 may control transmission of the user equipment assistance information message including the preference information related to each of the plurality of DRX configurations. The prohibit timer may be configured to be common to the plurality of DRX configurations. For example, the base station apparatus 20 may transmit the RRC message including the prohibit timer common to the plurality of DRX configurations (that is, the value of the common prohibit timer). Based on the prohibit timer configured to be common to the plurality of DRX configurations, the terminal apparatus 10 may control transmission of the user equipment assistance information message including the preference information related to each of the plurality of DRX configurations.

The indication information and/or the prohibit timer may be transmitted from the base station apparatus 20 to the terminal apparatus 10 by being included in the RRC reconfiguration message (or another RRC message). The indication information and/or the prohibit timer may be transmitted from the base station apparatus 20 to the terminal apparatus 10 in parallel, separately from the RRC reconfiguration message (or another RRC message). In the case of separate transmission, the indication information and/or the prohibit timer may be transmitted in an RRC message, or may be transmitted in a message (a MAC CE, DCI, or the like) of another layer.

In Step S1216, based on the information indicating one or more DRX configurations included in the RRC reconfiguration message (or another RRC message) transmitted from the base station apparatus 20, the terminal apparatus 10 configures one or more DRX configurations for the terminal apparatus 10. Based on the one or more DRX configurations, the terminal apparatus 10 monitors the PDCCH (that is, performs PDCCH monitoring in the DRX operation). For example, the terminal apparatus 10 may consider a time in which the on-duration timer (drx-onDurationTimer) or the inactivity timer (drx-InactivityTimer) is running as the active time. The terminal apparatus 10 may monitor the PDCCH in the active time. For example, the terminal apparatus 10 may consider a time in which the on-duration timer (drx-onDurationTimer) or the inactivity timer (drx-InactivityTimer) is running configured for a certain cell group as the active time for the serving cell belonging to the certain cell group. In a case where the certain cell group is in the active time, the terminal apparatus 10 may monitor the PDCCH in the serving cell belonging to the certain cell group.

Regarding the present sequence diagram, the terminal apparatus 10 continues PDCCH monitoring in the DRX operation of Step S1216 until Step S1220 is reached.

As illustrated in Fig. 12, in Step S1220, the terminal apparatus 10 determines that a condition to transmit the preference information is satisfied. The "condition to transmit the preference information" will be illustrated below. The following condition may be expressed as a "condition to obviate the need for the DRX configuration(s)" or a "condition to require the DRX configuration(s)", for example.

- In the terminal apparatus 10, reception of traffic (for example, the video traffic) corresponding to the DRX configuration has been stopped/started.
- Power consumption of the terminal apparatus 10 per unit time has reached above/below a predetermined threshold.
- The remaining battery of the terminal apparatus 10 has reached below/above a predetermined threshold.
- A user has explicitly or implicitly indicated the terminal apparatus 10 to transmit the preference information.
- The terminal apparatus 10 has a preference for the DRX configuration(s). For example, the terminal apparatus 10 has a preference for each of one or more DRX parameters included in each of the plurality of DRX configurations.

In Step S1222, the terminal apparatus 10 transmits the user equipment assistance information (UEAssistanceInformation) message including the preference information to the base station apparatus 20 via the communicator 120. The preference information may be information indicating whether or not the terminal apparatus 10 is to use one or more DRX configurations out of the plurality of DRX configurations configured for the terminal apparatus 10 by the base station apparatus 20. The preference information is generated by the terminal apparatus 10. For example, in a case where the terminal apparatus 10 has a preference for one or more DRX parameters, the terminal apparatus 10 may include a corresponding parameter in the preference information and set a preferred value for the terminal apparatus 10 to the parameter. As described above, the one or more DRX parameters are included in each of the plurality of DRX configurations, and may be configured for a certain cell group (that is, each of the cell groups). Based on Step S1220 and Step S1222, the following expression may be used: "the preference information indicates no use of the DRX configuration corresponding to traffic determined to be unnecessary in the terminal apparatus 10" or "the preference information indicates use of the DRX configuration corresponding to traffic determined to be necessary in the terminal apparatus 10".

Any information structure that can indicate "whether or not to use one or more DRX configurations" may be used as the preference information. For example, as the preference information, a bit string may be used, or the configuration identifier(s) and/or the parameter identifier(s) of the DRX configuration(s) may be used.

In a case where the preference information is indicated by a bit string, 1 bit may indicate whether or not one DRX configuration is to be used. For example, in a case where the bit string starts from the number "0" and the configuration identifier of the DRX configuration starts from the number "1", an i-th bit may correspond to an (i+1)-th DRX configuration. In other words, the i-th bit of the preference information may indicate a preference for the DRX configuration assigned an (i+1)-th configuration identifier. In the bit string, "0" may indicate "the DRX configuration is to be used" and "1" may indicate "the DRX configuration is not to be used". A length of the bit string of the preference information (that is, the number of bits of the preference information) may be a fixed length or a variable length. For example, the length of the bit string of the preference information may be determined based on the number of DRX configurations configured for the terminal apparatus 10. For example, the length of the bit string of the preference information may be determined based on the configuration identifier (for example, the value of the configuration identifier) of the DRX configuration configured for the terminal apparatus 10.

As an example, the fixed number of bits of the preference information may be a maximum number or more of DRX configurations that are configurable for the terminal apparatus 10, and is preferably equal to the maximum number. For example, the length of the bit string of the preference information may be equal to the number of DRX configurations configured for the terminal apparatus 10.

In a case where the configuration identifier is used for the preference information, for example, a pair of the configuration identifier indicating the DRX configuration of which use state is intended to be changed by the terminal apparatus 10 and information indicating the use state (for example, maintain or release) required by the terminal apparatus 10 may be included in the preference information. In other words, the terminal apparatus 10 may include the configuration identifier indicating the DRX configuration and the preference for the DRX configuration (and/or each of the one or more DRX parameters included in the DRX configuration) in the preference information. The preference corresponding to each of the plurality of DRX configurations may be included in the preference information. Regarding addition of the DRX configuration, the configuration identifier indicating the DRX configuration to be added to the terminal apparatus 10 (that is, to be newly used) may be included in the preference information.

In a case where the parameter identifier is used for the preference information, for example, a pair of the parameter identifier indicating the DRX parameter in the DRX configuration intended to be changed by the terminal apparatus 10 and a parameter value required by the terminal apparatus 10 may be included in the preference information. In other words, the terminal apparatus 10 may include the parameter identifier indicating the DRX parameter and the preference for the DRX parameter in the preference information. The preference corresponding to each of the plurality of DRX parameters may be included in the preference information. Regarding addition of the DRX parameter, the parameter identifier indicating the DRX parameter to be added to the terminal apparatus 10 (that is, to be newly used) may be included in the preference information.

The preference information may be transmitted from the terminal apparatus 10 to the base station apparatus 20, using various messages or signals. As described above, the user equipment assistance information message being an RRC message may include the preference information corresponding to the plurality of DRX configurations, and the terminal apparatus 10 may transmit the user equipment assistance information message to the base station apparatus 20. The preference information may be a DRX-Preference IE included in UEAssistanceInformation, or may be an IE to be newly defined. The preference information may be transmitted from the terminal apparatus 10 to the base station apparatus 20 on another RRC message.

In addition, the preference information may be transmitted from the terminal apparatus 10 to the base station apparatus 20 in a layer other than the RRC layer. The preference information may be transmitted in an uplink MAC CE, or the preference information may be transmitted in UCI.

In Step S1224, based on the preference information included in the user equipment assistance information message (or another RRC message) received from the terminal apparatus 10, the base station apparatus 20 configures the base station apparatus 20 with the DRX configurations on the base station side corresponding to the plurality of DRX configurations to be configured for the terminal apparatus 10. For example, the base station apparatus 20 configures the base station apparatus 20 to release the DRX configuration(s) "not to be used" indicated by the received preference information.

In Step S1226, the base station apparatus 20 transmits the RRC reconfiguration message (or another RRC message) including the information indicating the plurality of DRX configurations to the terminal apparatus 10. For example, the base station apparatus 20 determines one or more DRX configurations based on the preference information received from the terminal apparatus 10, and transmits the RRC reconfiguration message including the information indicating the one or more determined DRX configurations to the terminal apparatus 10. For example, the base station apparatus 20 includes the information indicating release of the DRX configuration(s) "not to be used" indicated by the preference information received from the terminal apparatus 10 in the RRC reconfiguration message to be transmitted to the terminal apparatus 10.

In Step S1228, based on the plurality of DRX configurations included in the RRC reconfiguration message (or another RRC message), the terminal apparatus 10 configures the plurality of DRX configurations for the terminal apparatus 10. Subsequently, based on the plurality of configured DRX configurations, the terminal apparatus 10 monitors the PDCCH (that is, performs PDCCH monitoring in the DRX operation). In other words, the terminal apparatus 10 monitors the PDCCH in the active time.

According to the configuration described above, the terminal apparatus 10 transmits the preference information indicating whether or not the terminal apparatus 10 is to use one or more DRX configurations to the base station apparatus 20. In other words, the terminal apparatus 10 transmits the preference information related to each of the one or more DRX configurations to the base station apparatus 20. The terminal apparatus 10 transmits the preference information related to each of the one or more DRX parameters included in each of the plurality of DRX configurations to the base station apparatus 20. Thus, the base station apparatus 20 can be notified as to whether or not the DRX configuration is necessary in the terminal apparatus 10 for each DRX configuration. As a result, for example, only unnecessary DRX configuration(s) out of the plurality of DRX configurations can be released, and therefore reduction of power consumption and appropriate DRX operation can be implemented in conjunction with each other. As a result, for example, only necessary DRX configuration(s) can be maintained or added, and therefore appropriate DRX operation can be performed with moderated increase of power consumption.

### 2.1. Alterations

While the present disclosure has been described with reference to the embodiments, it is to be understood that the present disclosure is not limited to the embodiments and structures. The present disclosure includes various alterations and equivalent alterations. Other combinations including one or more elements included in the embodiments are also within the scope and the concept of the present disclosure.

Expressions such as words and phrases used in the embodiments are merely examples, and may be replaced with substantially the same or similar expressions. Particularly, since the technique according to the embodiments relates to technical specifications, the expressions in the embodiments may be replaced with substantially the same or similar expressions in the technical specifications (for example, the technical specifications cited in the Specification of the present application).

The information transmitted and received in the embodiments may be transmitted and received in the same or a different message or the same or a different element as or from that already described in the technical specifications, or may be transmitted and received in a new message or element to be defined. The information transmitted and received in the embodiments may be transmitted and received using a different layer and/or a different channel from that of the embodiments.

The means and/or the functions provided by the apparatuses described in the embodiments can be provided by software stored in a tangible memory apparatus and a computer that executes the software, the software only, hardware only, or a combination of those. For example, in a configuration in which one of the apparatuses is provided by an electronic circuit being hardware, it can be provided by a digital circuit including a number of logic circuits or an analog circuit.

The apparatuses described in the embodiments execute a program stored in a non-transitory tangible storage medium. Execution of the program causes execution of a method corresponding to the program.

### 2.2. Supplementary Notes

The whole or part of the embodiments and the alterations can be described as the following supplementary notes, but the disclosure is not limited to the contents of the following supplementary notes. The following expresses relationships in which a supplementary note that depends upon a plurality of supplementary notes depends upon a supplementary note that depends upon a plurality of supplementary notes. All of the dependency relationships of the supplementary notes expressed below are included in the embodiments.

(Supplementary Note 1)

A terminal apparatus (10) including:

a controller (110); and
a communicator (120) configured to be controlled by the controller to perform radio communication, wherein
for one or more discontinuous reception configurations out of a plurality of discontinuous reception configurations that are configurable by a base station apparatus (20), the controller is configured to transmit preference information indicating whether or not the terminal apparatus is to use the one or more discontinuous reception configurations, to the base station apparatus via the communicator.

(Supplementary Note 2)

The terminal apparatus according to Supplementary Note **1,** wherein
each of the plurality of discontinuous reception configurations configured for the terminal apparatus includes a plurality of discontinuous reception parameters.

(Supplementary Note 3)

The terminal apparatus according to Supplementary Note 2, wherein
a common discontinuous reception parameter being the discontinuous reception parameter used to be common to the plurality of discontinuous reception configurations is configured.

(Supplementary Note 4)

The terminal apparatus according to Supplementary Note 2 or 3, wherein
the preference information includes one or more parameter identifiers for identifying the plurality of discontinuous reception parameters.

(Supplementary Note 5)

The terminal apparatus according to any one of Supplementary Notes 1 to 4, wherein
the preference information includes one or more configuration identifiers for identifying the plurality of discontinuous reception configurations.

(Supplementary Note 6)

The terminal apparatus according to Supplementary Note 5, wherein
the preference information includes information indicating whether or not a discontinuous reception configuration corresponding to each of the one or more configuration identifiers is to be used.

(Supplementary Note 7)

The terminal apparatus according to any one of Supplementary Notes 1 to 4, wherein

the preference information is a bit string including a plurality of bits corresponding to the plurality of discontinuous reception configurations, and
the plurality of bits respectively indicate whether or not the plurality of discontinuous reception configurations are to be used.

(Supplementary Note 8)

The terminal apparatus according to any one of Supplementary Notes 1 to 7, wherein
each of the plurality of discontinuous reception configurations is configured with a prohibit timer indicating a duration for prohibiting retransmission of the preference information.

(Supplementary Note 9)

The terminal apparatus according to any one of Supplementary Notes 1 to 8, wherein

the communicator is configured to transmit and receive a plurality of types of traffic, and
the plurality of discontinuous reception configurations respectively correspond to the plurality of types of traffic.

(Supplementary Note 10)

The terminal apparatus according to Supplementary Note 9, wherein
the plurality of discontinuous reception configurations have cycles of on-durations different from each other corresponding to the plurality of types of traffic.

(Supplementary Note 11)

The terminal apparatus according to Supplementary Note 9 or 10, wherein
the controller is configured to transmit the preference information indicating no use of a discontinuous reception configuration corresponding to traffic determined to be unnecessary in the terminal apparatus, to the base station apparatus.

(Supplementary Note 12)

The terminal apparatus according to any one of Supplementary Notes 1 to 11, wherein
the controller is configured to transmit capability information indicating that the plurality of discontinuous reception configurations are configurable for the terminal apparatus, to the base station apparatus via the communicator.

(Supplementary Note 13)

The terminal apparatus according to Supplementary Note 12, wherein
the capability information indicates a maximum number of the plurality of discontinuous reception configurations supported by the terminal apparatus.

(Supplementary Note 14)

A base station apparatus (20) including:

a controller (210); and
a communicator (220) configured to be controlled by the controller to perform radio communication, wherein
for one or more discontinuous reception configurations out of a plurality of discontinuous reception configurations that are configurable for the terminal apparatus, the controller is configured to receive preference information indicating whether or not a terminal apparatus is to use the one or more discontinuous reception configurations, from the terminal apparatus via the communicator.

(Supplementary Note 15)

A method including, in a terminal apparatus:

for one or more discontinuous reception configurations out of a plurality of discontinuous reception configurations that are configurable by a base station apparatus, generating preference information indicating whether or not the terminal apparatus is to use the one or more discontinuous reception configurations; and
transmitting the preference information to the base station apparatus.

(Supplementary Note 16)

A communication system (S) including a terminal apparatus and a base station apparatus that perform radio communication with each other,
wherein, for one or more discontinuous reception configurations out of a plurality of discontinuous reception configurations that are configurable by the base station apparatus (20), the terminal apparatus (10) is configured to transmit preference information indicating whether or not the terminal apparatus is to use the one or more discontinuous reception configurations, to the base station apparatus via a communicator.

(Supplementary Note 17)

A program causing a terminal apparatus (10) to execute:

for one or more discontinuous reception configurations out of a plurality of discontinuous reception configurations that are configurable by a base station apparatus (20), generating preference information indicating whether or not the terminal apparatus is to use the one or more discontinuous reception configurations; and
transmitting the preference information to the base station apparatus.

(Supplementary Note 18)

A non-transitory tangible storage medium recording a program causing a terminal apparatus (10) to execute:

for one or more discontinuous reception configurations out of a plurality of discontinuous reception configurations that are configurable by a base station apparatus (20), generating preference information indicating whether or not the terminal apparatus is to use the one or more discontinuous reception configurations; and
transmitting the preference information to the base station apparatus.

**Claims**

1. A terminal apparatus (10) comprising:

a controller (110); and
a communicator (120) configured to be controlled by the controller to perform radio communication, wherein
for one or more discontinuous reception configurations out of a plurality of discontinuous reception configurations that are configurable by a base station apparatus (20), the controller is configured to transmit preference information indicating whether or not the terminal apparatus is to use the one or more discontinuous reception configurations, to the base station apparatus via the communicator.

2. The terminal apparatus according to claim 1, wherein
each of the plurality of discontinuous reception configurations configured for the terminal apparatus includes a plurality of discontinuous reception parameters.

3. The terminal apparatus according to claim 2, wherein
a common discontinuous reception parameter being the discontinuous reception parameter used to be common to the plurality of discontinuous reception configurations is configured.

4. The terminal apparatus according to claim 2, wherein
the preference information includes one or more parameter identifiers for identifying the plurality of discontinuous reception parameters.

5. The terminal apparatus according to claim 1, wherein
the preference information includes one or more configuration identifiers for identifying the plurality of discontinuous reception configurations.

6. The terminal apparatus according to claim 5, wherein
the preference information includes information indicating whether or not a discontinuous reception configuration corresponding to each of the one or more configuration identifiers is to be used.

7. The terminal apparatus according to claim 1, wherein

the preference information is a bit string including a plurality of bits corresponding to the plurality of discontinuous reception configurations, and
the plurality of bits respectively indicate whether or not the plurality of discontinuous reception configurations are to be used.

8. The terminal apparatus according to claim 1, wherein
each of the plurality of discontinuous reception configurations is configured with a prohibit timer indicating a duration for prohibiting retransmission of the preference information.

9. The terminal apparatus according to claim 1, wherein

the communicator is configured to transmit and receive a plurality of types of traffic, and
the plurality of discontinuous reception configurations respectively correspond to the plurality of types of traffic.

10. The terminal apparatus according to claim 9, wherein

the plurality of discontinuous reception configurations have cycles of on-durations different from each other corresponding to the plurality of types of traffic.

11. The terminal apparatus according to claim 9, wherein
   the controller is configured to transmit the preference information indicating no use of a discontinuous reception configuration corresponding to traffic determined to be unnecessary in the terminal apparatus, to the base station apparatus.

12. The terminal apparatus according to claim 1, wherein
   the controller is configured to transmit capability information indicating that the plurality of discontinuous reception configurations are configurable for the terminal apparatus, to the base station apparatus via the communicator.

13. The terminal apparatus according to claim 12, wherein
   the capability information indicates a maximum number of the plurality of discontinuous reception configurations supported by the terminal apparatus.

14. A base station apparatus (20) comprising:

   a controller (210); and
   a communicator (220) configured to be controlled by the controller to perform radio communication, wherein
   for one or more discontinuous reception configurations out of a plurality of discontinuous reception configurations that are configurable for the terminal apparatus, the controller is configured to receive preference information indicating whether or not a terminal apparatus is to use the one or more discontinuous reception configurations, from the terminal apparatus via the communicator.

15. A method comprising, in a terminal apparatus:

   for one or more discontinuous reception configurations out of a plurality of discontinuous reception configurations that are configurable by a base station apparatus, generating preference information indicating whether or not the terminal apparatus is to use the one or more discontinuous reception configurations; and
   transmitting the preference information to the base station apparatus.

S

CORE NETWORK ~ 30

NG          NG

20 ~ BASE STATION APPARATUS ── Xn ── BASE STATION APPARATUS ~ 20

TERMINAL APPARATUS          TERMINAL APPARATUS

10          10

Fig. 1

EP 4 546 881 A1

EP 4 546 881 A1

Fig. 2

Fig. 3

Fig. 4

Fig. 5

Fig. 6

Fig. 7

1 radio frame (10 ms)

1 half frame (5 ms)

1 subframe (1 ms)

μ = 0 — 1 slot (14 OFDM symbols), 1 slot (14 OFDM symbols)

μ = 1 — 1 slot (14 OFDM symbols), 1 slot (14 OFDM symbols)

Fig. 8

```
┌─────────────────────────────────────────────┐
│              RRC_CONNECTED                    │
└─────────────────────────────────────────────┘
        ↕ RESUME/                              ↕
          RELEASE WITH SUSPENSION
   ┌──────────────────────┐        ESTABLISH/RELEASE
   │    RRC_INACTIVE       │
   └──────────────────────┘
        ↓ RELEASE
┌─────────────────────────────────────────────┐
│                 RRC_IDLE                      │
└─────────────────────────────────────────────┘
```

Fig. 9

Fig. 10

Fig. 11

EP 4 546 881 A1

TERMINAL APPARATUS 10

BASE STATION APPARATUS 20

S1210 UECapabilityInformation

S1212

S1214 RRCReconfiguration

S1216

S1220

S1222 UEAssistanceInformation

S1224

S1226 RRCReconfiguration

S1228

Fig. 12

## INTERNATIONAL SEARCH REPORT

| International application No. |
|---|
| **PCT/JP2023/019254** |

**A. CLASSIFICATION OF SUBJECT MATTER**

**H04W 52/02**(2009.01)i; **H04W 8/24**(2009.01)i
FI: H04W52/02 111; H04W8/24

According to International Patent Classification (IPC) or to both national classification and IPC

**B. FIELDS SEARCHED**

Minimum documentation searched (classification system followed by classification symbols)

H04W52/02; H04W8/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-11235 A (NTT DOCOMO, INC.) 18 January 2018 (2018-01-18)<br>abstract, claims 1, 2, paragraphs [0039]-[0062], [0069]-[0077], [0087], fig. 9, 10, 12 | 1-15 |
| Y | SONY. Remaining issues on UE assistance information for PDCCH-based WUS[online], 3GPP TSG RAN WG2 #110-e R2-2005145, 12 June 2020, pp. 1-7<br>pp. 1, 2, 1. Introduction, pp. 3-6, 2. Discussion | 1-15 |
| Y | SONY. Power saving UE assistance information[online], 3GPP TSG RAN WG2 #109_e R2-2000869, 06 March 2020, pp. 1-5<br>pp. 1, 2, 1. Introduction, pp. 2, 3, 2. Controlled UE assistance information signalling, pp. 3, 4, 3. UE assistance information related to PDCCH-based power saving signal | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 August 2023** | **15 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/019254**

| Patent document cited in search report | Publication date (day/month/year) | Patent family member(s) | Publication date (day/month/year) |
|---|---|---|---|
| JP 2018-11235 A | 18 January 2018 | (Family: none) | |

Form PCT/ISA/210 (patent family annex) (January 2015)

**EP 4 546 881 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022099925 A

### Non-patent literature cited in the description

- *3GPP TR 38.838 V17.0.0*, December 2021
- *3GPP TS 38.331 V17.0.0*, March 2022